# EUROPEAN PATENT APPLICATION

(11) **EP 4 254 581 A1**
(43) Date of publication of application: **04.10.2023**
(21) Application number: 21898029.0
(22) Date of filing: 25.11.2021
(51) Int. Cl.: H01M 10/052, H01M 10/0567, H01M 10/058, H01M 10/613, H01M 10/643, H01M 10/659, H01M 50/20

(54) **BATTERY MODULE**

(30) Priority: 30.11.2020 JP 2020199050
(71) Applicant: Panasonic Intellectual Property Management Co., Ltd., Kadoma-shi, Osaka 571-0057 (JP)
(72) Inventor: MURAYAMA Chifumi, Kadoma-shi, Osaka 571-0057 (JP); OGINO Hirotaka, Kadoma-shi, Osaka 571-0057 (JP); KANO Akira, Kadoma-shi, Osaka 571-0057 (JP)
(74) Representative: Novagraaf International SA
(86) International application number: PCT/JP2021/043180
(87) International publication number: WO 2022/114057

(57) **Abstract**

A battery module, including: a plurality of lithium secondary batteries aligned side by side; and a heat absorbing material disposed in contact with side surfaces of the plurality of lithium secondary batteries, wherein the lithium secondary battery includes an electrode plate group, a non-aqueous electrolyte having lithium ion conductivity, and a battery case housing the electrode plate group and the non-aqueous electrolyte, the electrode plate group includes a positive electrode, a negative electrode, and a separator interposed between the positive electrode and the negative electrode, and at the negative electrode, a lithium metal deposits during charge and the lithium metal dissolves during discharge. This can suppress the increase in battery temperature in the event of abnormality.

## Description

### [Technical Field]

The present disclosure relates to a battery module.

### [Background Art]

Patent Literature 1 proposes a battery pack having a plurality of cylindrical unit cells, in which the plurality of cylindrical unit cells are arranged such that their outer peripheral surfaces are in contact with each other or in proximity to each other with a space of 1.0 mm or less therebetween, and in a region between outer peripheral surfaces in the plurality of cylindrical unit cells, a potting resin portion is formed in close contact with the outer peripheral surfaces.

### [Citation List]

### [Patent Literature]

Patent Literature 1: Japanese Laid-Open Patent Publication No. 2012-028244

### [Summary of Invention]

### [Technical Problem]

In the battery pack of Patent Literature 1, in a region between outer peripheral surfaces in the plurality of cylindrical unit cells, the potting resin portion is formed in close contact with the outer peripheral surfaces. Therefore, the adhesion between the peripheral surfaces of the cylindrical unit cells and the potting resin portion is high, and an air layer is hardly left therebetween. Accordingly, the heat generated in the cylindrical unit cells is efficiently transferred to the potting resin portion.

However, in the event of abnormality, the battery temperature may increase abruptly. At this time, the increase width of battery temperature becomes larger as the energy density of the battery is higher. A larger increase width of battery temperature leads to a greater influence on the surrounding batteries which are not in an abnormal state. It is therefore required to minimize the increase width of temperature of the battery in an abnormal state.

### [Solution to Problem]

In view of the above, one aspect of the present disclosure relates to a battery module, including: a plurality of lithium secondary batteries aligned side by side; and a heat absorbing material disposed in contact with side surfaces of the plurality of lithium secondary batteries, wherein the lithium secondary battery includes an electrode plate group, a non-aqueous electrolyte having lithium ion conductivity, and a battery case housing the electrode plate group and the non-aqueous electrolyte, the electrode plate group includes a positive electrode, a negative electrode, and a separator interposed between the positive electrode and the negative electrode, and at the negative electrode, a lithium metal deposits during charge and the lithium metal dissolves during discharge.

### [Advantageous Effects of Invention]

According to the battery module of the present disclosure, an increase in battery temperature in the event of abnormality can be remarkably suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic cross-sectional view of part of a battery module according to the present disclosure.
[FIG. 2] A cross-sectional view taken along line II-II of the part of the battery module in FIG. 1, which is a cross section perpendicular to the axial direction of batteries.
[FIG. 3] A schematic front view of an example of a secondary battery included in the battery module, partially shown in a cross section.
[FIG. 4] A partial cross-sectional view of another battery module according to the present disclosure, shown in a cross section perpendicular to the axial direction of batteries.
[FIG. 5] A partial cross-sectional view of still another battery module according to the present disclosure, shown in a cross section perpendicular to the axial direction of batteries.
[FIG. 6] A partial cross-sectional view of yet another battery module according to the present disclosure, shown in a cross section perpendicular to the axial direction of batteries.

### [Description of Embodiments]

In the following, embodiments of the present disclosure will be described. It is to be noted that the description of embodiments of the present disclosure will be given below by way of examples, but the present disclosure is not limited to the examples described below. In the description below, specific numerical values and materials are exemplified in some cases, but other numerical values and materials may be applied as long as the effects of the present disclosure can be achieved.

### (Battery module)

A battery module according to the present disclosure includes: a plurality of lithium secondary batteries aligned side by side; a holder having a housing section that houses the plurality of lithium secondary batteries; and a heat absorbing material disposed in at least one space selected from the group consisting of a space between the plurality of lithium secondary batteries and a space between the lithium secondary batteries and the holder. The holder has an opening that provides communication between inside and outside of the holder. The shape of the lithium secondary battery may be, for example, a columnar shape, and may be a cylindrical shape.

The space between the plurality of lithium secondary batteries may be one communicating space, or may be divided into a plurality of spaces. Likewise, the space between the lithium secondary batteries and the holder may be one communicating space, or may be divided into a plurality of spaces. Also, a space between the plurality of lithium secondary batteries and a space between the lithium secondary batteries and the holder may be communicated with each other. It suffices that a heat absorbing material is disposed in at least one of these spaces. Here, that "the heat absorbing material is disposed" in a space means that the heat absorbing material is disposed in at least part of that space, and the whole of that space may not necessarily be filled with the heat absorbing material.

The plurality of lithium secondary batteries may be arranged such that the longitudinal directions thereof are each along one direction. In other words, the longitudinal directions of the plurality of lithium secondary batteries may be parallel (including when substantially parallel) to one another. Here, the longitudinal direction refers to, when the lithium secondary battery is columnar, a direction parallel to the central axis of the tubular portion (e.g., cylindrical portion) of the battery case. In one typical example, a plurality of lithium secondary batteries are arranged such that the first ends of the plurality of lithium secondary batteries are disposed on one imaginary plane.

The holder may include, for example, a first holder and a second holder. The plurality of lithium secondary batteries each usually have a first end in a height direction that is perpendicular to the aligning direction, and a second end opposite to the first end. The first end is housed in the first holder, and the second end is housed in the second holder. It should be noted that when the heat absorbing material is molded, the holder can be omitted.

The first holder usually has a planar portion having a first housing section, and the first end of the lithium secondary battery is housed in the first housing section. Likewise, the second holder usually has a planar portion having a second housing section, and the second end of the lithium secondary battery is housed in the second housing section.

The orientations of the plurality of lithium secondary batteries may be the same or different. For example, when the lithium secondary battery has a positive terminal at one end, the ends on the positive terminal side of all the lithium secondary batteries may be housed in the first holder, or may be housed in the second holder. Alternatively, some of the ends on the positive terminal side of all the lithium secondary batteries may be housed in the first holder, while the remaining ends on the positive terminal side may be housed in the second holder.

The holder is usually formed using an electrically insulating resin and the like. The insulating resin may be a resin conventionally used as a material for a holder of a battery module or a power storage module. Examples of the insulating resin include a thermosetting resin and a thermoplastic resin, including polycarbonate, ABS resin (acrylonitrile-butadiene-styrene copolymer), and the like. The holder can be formed by, for example, injection molding or the like. The holder may be constituted of a metal, as long as electrical insulation from the battery can be maintained.

The battery module of the present disclosure includes other components as needed. For example, the battery module usually includes a conductive member for positive electrode and a conductive member for negative electrode connected respectively to a positive terminal and a negative terminal for charging and discharging. The conductive member for positive electrode and the conductive member for negative electrode may be disposed on different sides or the same side of the battery module. For example, when the positive terminal is disposed on the first holder side, the conductive member for positive electrode may be disposed on the first holder side, while the conductive member for negative electrode may be disposed on the second holder side. Alternatively, when the positive terminal is disposed on the first holder side, the conductive member for positive electrode and the conductive member for negative electrode may be both disposed on the first holder side. Alternatively, when some of a plurality of positive terminals are disposed on the first holder side and the remaining positive terminals are disposed on the second holder side, the conductive member for positive electrode and the conductive member for negative electrode may be both disposed on the first holder side and the second holder side.

### (Heat absorbing material)

The heat absorbing material may include a resin, and particles packed in the resin. The particles contain an inorganic material that decomposes through an endothermic reaction. When the resin is in close contact with the outer peripheral surface or side surface of the battery, and contains an inorganic material that decomposes through an endothermic reaction in the resin, the heat generated in the battery is efficiently transferred to the inorganic material that decomposes through an endothermic reaction. Thus, the increase width of battery temperature in the event of abnormality is further minimized. The heat absorbing material, before being placed in the space between the plurality of lithium secondary batteries or in the space between the lithium secondary batteries and the holder, may be liquid or may be a molded body (e.g., a sheet) suited for processing.

In the outer peripheral surface of the lithium secondary battery, the percentage of the area of the surface to be in contact with the material constituting the heat absorbing material (i.e., at least one of the resin and the aforementioned particles) may be set to 50 to 100% of the area of the outer peripheral surface of the lithium secondary battery (e.g., 70 to 100%). The upper limit of these ranges may be set to 98% or less, or 95% or less. The thickness of the heat absorbing material covering the side surface of each lithium secondary battery is, for example, 0.6 mm or more.

For the resin, for example, a curable resin that can be placed in a space between the plurality of lithium secondary batteries or in a space between the lithium secondary batteries and the holder, and can be cured thereafter can be used. The curable resin may be of one-liquid type, or two-liquid type. A two-liquid type is a resin that is cured by mixing two components. Examples of the resin include a urethane resin (polyurethane), an epoxy resin, a silicone resin, and foamed resins thereof. The urethane resin can be obtained by mixing a polyol component (first material) and a polyisocyanate component (second material). These components are liquid immediately after mixing, but a reaction proceeds with time, resulting in a cured urethane resin. It is possible to impart the urethane resin with various properties (e.g., thermal conductivity, heat absorbing or flame retardant property, electrically insulating property ) by selecting the ingredients or adding an additive. Therefore, the urethane resin is suitable as a resin to be packed with particles containing an inorganic substance that decomposes through an endothermic reaction.

Examples of the inorganic substance that decomposes through an endothermic reaction include aluminum hydroxide, magnesium hydroxide, calcium hydroxide, zinc hydroxide, iron hydroxide, manganese hydroxide, zirconium hydroxide, and gallium hydroxide. Examples of the particles containing such an inorganic substance include an inorganic filler comprising aluminum hydroxide, an inorganic filler comprising magnesium hydroxide, an inorganic filler comprising calcium hydroxide, an inorganic filler comprising zinc hydroxide, an inorganic filler comprising iron hydroxide, an inorganic filler comprising zirconium hydroxide, and an inorganic filler comprising gallium hydroxide. In the event when the battery is overheated, the heat absorbing material including these inorganic substances can effectively inhibit the temperature increase in the battery. The content of the inorganic substance in the heat absorbing material is, for example, 60 mass% or more and 80 mass % or less. The heat absorbing material, depending on its kind, becomes less thermally conductive after causing an endothermic reaction than before. Because of this action, when the battery is normal, the heat absorbing material can transfer the heat generated in this battery to the holder, making it possible to realize the heat release from the battery, whereas when the battery is abnormal, causes an endothermic reaction and becomes less thermally conductive, making it possible to suppress the heat transfer between this battery and the holder. By suppressing the heat transfer from the abnormal battery, it is possible to suppress the deterioration of the holder and the normal batteries around the abnormal battery.

The reason why the thermal conductivity of the heat absorbing material becomes lower after the endothermic reaction than that before the endothermic reaction as described above is presumably because, when the inorganic substance that decomposes through an endothermic reaction is the aforementioned metal hydroxide, the metal hydroxide is decomposed into a porous metal oxide and water vapor by the endothermic reaction. The resin contained in the heat absorbing material decomposes or volatilizes due to the heat of the abnormal battery, leaving the aforementioned porous metal oxide, which brings about a heat insulating effect between the abnormal battery and the holder. For example, aluminum hydroxide, which is an example of the inorganic substance, is decomposed into a porous aluminum oxide and water vapor by the endothermic reaction. This porous aluminum oxide brings about a heat insulating effect between the abnormal battery and the holder.

### (Lithium secondary battery)

The lithium secondary battery of the present disclosure includes an electrode plate group, a non-aqueous electrolyte having lithium ion conductivity, and a battery case housing the electrode plate group and the non-aqueous electrolyte. The electrode plate group includes a positive electrode, a negative electrode, and a separator interposed between the positive electrode and the negative electrode. At the negative electrode, a lithium metal deposits during charge and the lithium metal dissolves during discharge.

The battery case may have, for example, a bottomed cylindrical portion having an opening on the first end side and a bottom on the second end side, and a sealing member sealing the opening of the cylindrical portion. At least one of the sealing member and the bottom is provided with a safety mechanism for releasing gas and the like within the battery when the internal pressure of the battery rises. The structure of the mechanism is not limited, but any conventionally-used, known mechanism may be adopted. When both the sealing member and the battery case are provided with a safety mechanism for releasing gas and the like, the safety of the lithium secondary battery can be further enhanced.

The battery case may have a ring-shaped groove formed on the first end side. The groove is typically formed for the purpose of positioning the sealing member and sealing the opening of the cylindrical portion. In such a lithium secondary battery, for example, the sealing member is electrically connected to one of the electrodes in the electrode plate group and functions as a terminal (e.g., a positive terminal), and the cylindrical portion is electrically connected to the other electrode in the electrode plate group and functions as a terminal (e.g., a negative terminal)

The negative electrode of the lithium secondary battery of the present disclosure has at least a negative electrode current collector, and a lithium metal deposits on the negative electrode current collector. The lithium secondary battery according to the present disclosure is sometimes referred to as a lithium metal secondary battery.

In the lithium (metal) secondary battery, for example, 70% or more of the rated capacity is developed by deposition and dissolution of lithium metal. The migration of electrons at the negative electrode during charge and discharge is mainly due to the deposition and dissolution of lithium metal at the negative electrode. Specifically, 70 to 100% (e.g., 80 to 100%, 90 to 100%) of the migration of electrons (in other words, current flow) at the negative electrode during charge and discharge is due to the deposition and dissolution of lithium metal. That is, the negative electrode according to the present disclosure differs from a negative electrode at which the migration of electrons at the negative electrode during charge and discharge is mainly due to absorption and release of lithium ions into and from the negative electrode active material (e.g., graphite) during charge and discharge.

In a battery in which a lithium metal deposits at the negative electrode during charge, the open circuit voltage (OCV) of the negative electrode at full charge is, for example, 70 mV or less versus lithium metal (lithium dissolution/deposition potential). Here, "at full charge" means a state in which the battery is charged to, for example, a charged state of 0.98×C or more, where C is the rated capacity of the battery. The OCV of the negative electrode at full charge can be measured by disassembling a fully charged battery in an argon atmosphere, to take out the negative electrode, and assembling a cell using lithium metal as a counter electrode. The non-aqueous electrolyte of the cell may be of the same composition as that in the disassembled battery.

A lithium secondary battery as above has a high energy density. Therefore, the increase width of battery temperature in the event of abnormality (e.g., when thermal runaway occurs in the battery) is extremely large. However, in a battery module in which lithium secondary batteries and a heat absorbing material are combined as described above, the increase in battery temperature is remarkably suppressed unexpectedly. Specifically, the effect produced by the heat absorbing material of minimizing the increase width of battery temperature is more apparent in a battery module in which lithium secondary batteries with higher energy density are combined with a heat absorbing material than a battery module in which lithium ion secondary batteries with lower energy density is combined with a heat absorbing material.

The reason why, in the combination of lithium secondary batteries having high energy density with a heat absorbing material, the increase width of battery temperature in the event of abnormality is significantly minimized is not clear; however, the following mechanism is presumed. In order to ensure safety, the battery is usually provided with a safety mechanism that suppresses the rise in internal pressure of the battery. When the safety mechanism is activated, gas and the like within the battery is discharged outside the battery case, and the internal pressure of the battery is reduced. The gas and the like discharged from the battery case is then discharged outside the battery module through an opening that provides communication between inside and outside of the holder. In a lithium secondary battery including a lithium metal deposited within the battery, such a safety mechanism is activated quickly, and a larger amount of gas is discharged externally. Presumably as a result, the heat capacity of the battery is decreased in the early stage, and the increase width of battery temperature is minimized.

In a lithium secondary battery, the volume of the negative electrode increases due to the deposition of a lithium metal during charge. In light of this, the battery case may have some extra space therein. For example, the ratio of a volume Vs of gaps in the electrode plate group, relative to a true volume Vr of the electrode plate group (100×Vs/Vr) may be, for example, 30% or more and 45% or less, and may be 35% or more and 45% or less. When the battery case has some extra space as above, the gas and the like within the battery is more quickly discharged outside the battery case. Presumably, therefore, the heat capacity of the battery tends to be more smoothly reduced, and the increase width of battery temperature can be further minimized.

The true volume Vr of the electrode plate group can be determined by, for example, taking out the electrode plate group, followed by washing and drying, then, immersing the dry electrode plate group in a liquid with a known specific gravity and a known volume, and calculating from the increase of the space occupied by the liquid (e.g., the rise of the liquid level).

The true volume Vs of gaps in the electrode plate group may be determined by, for example, taking out the electrode plate group, followed by washing and drying, and measuring with a pore volume measuring device, such as a mercury porosimeter, or immersing the dry electrode plate group in a liquid with a known specific gravity and a known volume, and calculating from the increase of the mass of the electrode plate group.

Note that in a battery with high energy density, the ratio of the volume Vs of gaps in the electrode plate group, relative to the true volume Vr of the electrode plate group (hereinafter sometimes referred to as a "space ratio") is, generally, smaller the more desirable. As for the "space ratio" in a lithium ion secondary battery in which lithium ions are absorbed into the negative electrode active material during charge, without deposition of a lithium metal on the negative electrode, 20 to 25% is a measure of high energy density. In contrast, however, in a lithium secondary battery in which a lithium metal deposits on the negative electrode during charge, the "space ratio" can be increased, with the high energy density maintained.

Here, a battery with high energy density refers to a battery with an energy density of, for example, 900 Wh/L or more, or even higher like 1000 Wh/L or more.

The electrode plate group may further include a spacer disposed between the separator and at least one of the positive electrode and the negative electrode. The spacer is disposed such that a region facing the positive electrode of the negative electrode has a first region facing the spacer and a second region not facing the spacer. In this case, a lithium metal deposits preferentially in the second region. Also, a gap is preferentially formed between the second region and the separator. The ratio of the volume Vs of gaps in the electrode plate group, relative to the true volume Vr of the electrode plate group can be controlled by the ratio between the first region and the second region and the height of the spacer.

A detailed description will be given below of each component element of the lithium secondary battery.

### [Negative electrode]

The negative electrode includes a negative electrode current collector. In a lithium secondary battery, a lithium metal deposits on a surface of the negative electrode current collector during charge. Specifically, lithium ions contained in the non-aqueous electrolyte receive electrons on the negative electrode during charge and become lithium metal, which deposits on the surface of the negative electrode. The lithium metal deposited on the surface of the negative electrode current collector dissolves during discharge in the form of lithium ions into the non-aqueous electrolyte. The lithium ions contained in the non-aqueous electrolyte may be either derived from a lithium salt added to the non-aqueous electrolyte or supplied from the positive electrode active material during charge, or both.

The negative electrode current collector may be provided with a base layer containing a lithium metal beforehand (i.e., a layer of lithium metal or lithium alloy (hereinafter sometimes referred to as a "lithium base layer")). The lithium alloy may include an element other than lithium, such as aluminum, magnesium, indium, and zinc. In the total lithium including the lithium base layer formed on the negative electrode current collector (i.e., a negative electrode active material constituted of a lithium metal and/or lithium alloy), the proportion of the lithium metal may be 92 mass% or more. The proportion of the lithium metal can be determined by, for example, taking out the negative electrode from the electrode plate group, and subjecting the negative electrode to NMR (nuclear magnetic resonance) measurement, to calculate from the area P1 of a peak of ionized lithium and the area P2 of a peak of non-ionized lithium, using a formula P2/(P 1+P2). By providing a lithium metal base layer and allowing a lithium metal to deposit thereon during charge, dendritic deposition can be effectively suppressed. The thickness of the lithium metal base layer may be, for example, in the range of 5 µm to 25 µm, but is not limited thereto.

The negative electrode may include a lithium ion absorption layer (a layer that develops a capacity through absorption and release of lithium ions into and from the negative electrode active material, such as graphite, supported on the negative electrode current collector). Even in this case, as long as the open circuit potential of the negative electrode at full charge is 70 mV or less versus lithium metal (lithium dissolution/deposition potential), a lithium metal is present on the surface of the lithium ion absorption layer at full charge. That is, the negative electrode develops a capacity through deposition and dissolution of lithium metal.

The lithium ion absorption layer is formed by forming a negative electrode mixture containing a negative electrode active material, into a layer. The negative electrode mixture may include, in addition to the negative electrode active material, a binder, a thickener, a conductive agent, and the like.

Examples of the negative electrode active material include a carbonaceous material, a Si-containing material, and a Sn-containing material. The negative electrode may include these negative electrode active materials singly or in combination of two or more kinds. Examples of the carbonaceous material include graphite, graphitizable carbon (soft carbon) and non-graphitizable carbon (hard carbon).

The conductive agent is, for example, a carbon material. Examples of the carbon material include carbon black, acetylene black, Ketjen black, carbon nanotubes, and graphite.

The binder may be, for example, a fluorocarbon resin, a polyacrylonitrile, a polyimide resin, an acrylic resin, a polyolefin resin, a rubbery polymer, and the like. Examples of the fluorocarbon resin include polytetrafluoroethylene and polyvinylidene fluoride.

The negative electrode current collector is an electrically conductive sheet. As the conductive sheet, foil, film, and the like are used.

The negative electrode current collector (conductive sheet) may be made of any conductive material other than a lithium metal and lithium alloy. The conductive material may be a metal material, such as a metal and an alloy. The conductive material is preferably a material that does not react with lithium. Specifically, preferred is a material that forms neither an alloy nor an intermetallic compound with lithium. Such a conductive material is exemplified by copper (Cu), nickel (Ni), iron (Fe), and an alloy of one or more of these metal elements, or graphite having a basal plane predominately exposed on its surface. Examples of the alloy include a copper alloy and stainless steel (SUS). In particular, copper and/or a copper alloy that has high electrical conductivity are preferred.

The thickness of the negative electrode current collector is, for example, 5 µm or more and 300 µm or less, but is not limited thereto.

### [Positive electrode]

The positive electrode includes, for example, a positive electrode current collector and a positive electrode mixture layer supported on the positive electrode current collector. The positive electrode mixture layer contains, for example, a positive electrode active material, a conductive agent, and a binder. The positive electrode mixture layer may be formed only on one side or on both sides of the positive electrode current collector. The positive electrode is obtained by, for example, applying a positive electrode mixture slurry containing a positive electrode active material, a conductive agent, and a binder on both sides of a positive electrode current collector, drying the applied film, and then rolling.

The positive electrode active material is a material that absorbs and releases lithium ions. Examples of positive electrode active materials include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium contained in the lithium-containing transition metal oxide is released from the positive electrode during charge in the form of lithium ions, and deposits in the form of a lithium metal on the negative electrode or the negative electrode current collector. During discharge, the lithium metal dissolves from the negative electrode to release lithium ions, which are absorbed into the composite oxide of the positive electrode. That is, lithium ions involved in charge and discharge are mostly derived from the solute in the non-aqueous electrolyte and the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain these transition metal elements singly or in combination of two or more kinds. The transition metal element may be Co, Ni, and/or Mn. The lithium-containing transition metal oxide can contain one or more kinds of typical metal elements, as needed. Examples of the typical metal element include Mg, Al, Ca, Zn, Ga, Ge, Sn, Sb, Pb, and Bi. The typical metal element may be Al, and the like.

Among the lithium-containing transition metal oxides, a composite oxide containing Co, Ni and/or Mn as transition metal elements and optionally containing Al, and having a layered rock-salt type crystal structure is preferred for achieving a high capacity. In this case, in the lithium secondary battery, a molar ratio mLi/mM of a total amount mLi of the lithium that the positive electrode and the negative electrode have, to an amount mM of the metal M other than lithium that the positive electrode has, is set to, for example, 1.1 or less.

As the binder, the conductive agent, and others, for example, those exemplified for the negative electrode can be used. The shape and the thickness of the positive electrode current collector can be selected from the shape and the range of the positive electrode current collector.

The positive electrode current collector (conductive sheet) may be made of, for example, a metal material containing Al, Ti, Fe, and the like. The metal material may be Al, an Al alloy, Ti, a Ti alloy, a Fe alloy, and the like. The Fe alloy may be stainless steel (SUS).

The thickness of the positive electrode current collector is, for example, 5 µm or more and 300 µm or less, but is not limited thereto.

### [Separator]

The separator is a porous sheet having ion permeability and electrically insulating properties. The porous sheet includes, for example, a thin film having fine pores, a woven fabric, a non-woven fabric, and the like. The separator may be made of a polymer material, but is not limited thereto. The polymer material is exemplified by an olefin resin, a polyamide resin, and cellulose. Examples of the olefin resin include polyethylene, polypropylene, and a copolymer of ethylene and propylene. The separator may contain an additive, as needed. Examples of the additive include an inorganic filler.

The thickness of the separator is, but not limited to, for example, 5 µm or more and 20 µm or less, and is more preferably 10 µm or more and 20 µm or less.

### [Non-aqueous electrolyte]

The non-aqueous electrolyte having lithium ion conductivity includes, for example, a non-aqueous solvent, and lithium ions and anions dissolved in the non-aqueous solvent. The non-aqueous electrolyte may be liquid, and may be gel.

The liquid non-aqueous electrolyte can be prepared by dissolving a lithium salt in the non-aqueous solvent. When the lithium salt is dissolved in the non-aqueous solvent, lithium ions and anions are produced.

The gel non-aqueous electrolyte includes a lithium salt and a matrix polymer, or includes a lithium salt, a non-aqueous solvent, and a matrix polymer. As the matrix polymer, for example, a polymer material that is gelled by absorbing the non-aqueous solvent is used. Examples of the polymer material include a fluorocarbon resin, an acrylic resin, and a polyether resin.

The lithium salt or anions may be any known one that is utilized for a non-aqueous electrolyte in a lithium secondary battery. Specific examples thereof include: BF₄⁻, ClO₄⁻, PF₆⁻, CF₃SO₃⁻, CF₃CO₂⁻, imide anions, and an oxalate complex anion. Examples of the imide anions include N(SO₂CF₃)₂⁻, and N(CₘF₂ₘ₊₁SO₂)ₓ(CₙF₂ₙ₊₁SO₂)_{y}⁻, where m and n are independently 0 or an integer of 1 or greater, x and y are independently 0, 1 or 2, and x+y = 2. The oxalate complex anion may contain boron and/or phosphorus. Examples of the oxalate complex anion include bis(oxalate)borate anion, BF₂(C₂O₄)⁻, PF₄(C₂O₄)⁻, and PF₂(C₂O₄)₂⁻. The non-aqueous electrolyte may include one kind of these anions, or two or more kinds thereof.

In view of suppressing the deposition of lithium metal in a dendritic form, the non-aqueous electrolyte preferably includes at least an anion of an oxalate complex, and in particular, desirably includes an oxalate complex anion having fluorine. The oxalate complex anion having fluorine interacts with lithium, making it more likely for a lithium metal to deposit uniformly in the form of fine particles. Therefore, local deposition of lithium metal is suppressed. As a result, the surface area of lithium metal is reduced, a reaction of lithium metal that occurs in the event of abnormality is suppressed, and the heat generation of the battery associated with the aforementioned reaction is also suppressed. Thus, the increase width of battery temperature in the event of abnormality is further minimized. The oxalate complex anion having fluorine may be combined with another anion. The other anion may be, for example, PF₆⁻ and/or imide anions.

The anion of an oxalate complex is derived from an oxalate salt. The oxalate salt is a salt containing cations (e.g., lithium ions) and oxalate complex anions. In particular, the oxalate salt desirably includes lithium difluorooxalate borate (LiBF₂(C₂O₄)). Lithium difluorooxalate borate is highly effective for allowing a lithium metal to deposit uniformly in the form of fine particles, and the effect of inhibiting the dendritic deposition of lithium metal is particularly remarkable. The ratio of the mass of the oxalate salt contained in the lithium secondary battery to the mass of the electrode plate group is, for example, 0.0004 to 0.0019. This mass ratio can be calculating from the weight of the electrode plate group measured with a weight scale, and the concentration of the oxalate salt in the non-aqueous electrolyte determined by gas chromatography using the non-aqueous electrolyte extracted from the lithium secondary battery.

Examples of the non-aqueous solvent include an ester, an ether, a nitrile, an amide, and halogen substituted derivatives of these. The non-aqueous electrolyte may contain one of these non-aqueous solvents, or two or more kinds thereof. Examples of the halogen substituted derivative include a fluoride.

The ester includes, for example, a carbonic acid ester, a carboxylic acid ester, and the like. Examples of the cyclic carbonic acid ester include ethylene carbonate, propylene carbonate, and fluoroethylene carbonate (FEC). Examples of the chain carbonic acid ester include dimethyl carbonate (DMC), ethyl methyl carbonate (EMC), and diethyl carbonate. Examples of the cyclic carboxylic acid ester include γ-butyrolactone and γ-valerolactone. Examples of the chain carboxylic acid ester include ethyl acetate, methyl propionate, and methyl fluoropropionate.

The ether includes a cyclic ether and a chain ether. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the non-aqueous electrolyte is, for example, 0.5 mol/L or more and 3.5 mol/L or less. The concentration of the anions in the non-aqueous electrolyte may be set to 0.5 mol/L or more and 3.5 mol/L or less. The concentration of the oxalate complex anion in the non-aqueous electrolyte may be set to 0.05 mol/L or more and 1 mol/L or less.

The non-aqueous electrolyte may contain an additive. The additive may form a surface film on the negative electrode. When the surface film derived from the additive is formed on the negative electrode, the dendrite formation and growth tend to be suppressed. Examples of the additive include vinylene carbonate, FEC, and vinyl ethyl carbonate (VEC).

### [Spacer]

The spacer is disposed between the separator and at least one of the positive electrode and the negative electrode. By this, a region facing the positive electrode of the negative electrode is divided into a first region facing the spacer, and a second region not facing the spacer. The proportion of the area of the first region relative to the total area of the first and second regions is not particularly limited, but considering the balance between the cycle characteristics and the internal resistance, the proportion may be, for example, 5% or more and 30% or less, and may be 5% or more and 20% or less. The larger the proportion of the area of the above first region, the more amount of lithium metal is likely to deposit per unit area in the second region. Therefore, the amount of isolated lithium metal can be easily reduced. Also, by controlling the proportion of the area of the above first region within the above range, a suitable pressing force can be applied all over the deposited lithium metal from the separator. Furthermore, the resistance to the electrode reaction can be reduced.

The first region facing the spacer desirably disposed on the negative electrode uniformly and dispersedly as much as possible. This can decrease the number of areas where a lithium metal can locally and abundantly deposit while suppressing the rise in internal resistance, and also, can make it easy to regulate the amount of isolated lithium metal to be as small as possible. Usually, the positive electrode and the negative electrode are each in a belt-like shape with a long side and a short side. When the length (width) in the direction of the short side of the belt-like negative electrode is denoted as L, and a circular region of any diameter corresponding to L/3 is drawn on the surface of the negative electrode, it is desirably that, in such a circular region, the first region and the second region are always co-present.

The height of the spacer is, for example, 10 µm or more, may be 20 µm or more, and may be 25 µm or more. The height of the spacer means a maximum dimension of the spacer in the thickness direction of the separator (hereinafter sometimes referred to as the direction T). The height of the spacer is obtained by measuring the height at any 10 points on a scanning electron microscope (SEM) image of a cross section of the spacer in the direction T, and averaging the measured values. The upper limit of the height of the spacer is, but not limited to, for example, 100 µm or less, may be 80 µm or less, and may be 60 µm or less. These upper and lower limits can be combined in any combination.

The spacer may be disposed in any arrangement. For example, the spacer is preferably disposed such that, when viewed from the direction T (the direction normal to the principal surface of the separator), a straight line SL along the short side direction of the belt-like negative electrode (hereinafter, the direction D1) can be drawn so as to pass through the spacer at three or more points (preferably four or more points, more preferably five or more points). In this case, a lithium metal is difficult to deposit non-uniformly or in a dendritic form on the negative electrode. Furthermore, localized expansion of the negative electrode is suppressed, leading to less damage to the electrodes. In addition, the number of support points where the spacer supports the separator and the electrodes is increased, and the separator and the electrodes are relatively evenly applied with the stress from the spacer. Thus, damage to the electrodes is further suppressed. Moreover, a more uniform pressing force can be applied all over the deposited lithium metal from the separator. Therefore, the deposition direction of lithium metal can be easily controlled so as to be along the surface direction of the negative electrode.

When viewed in the direction T, on the straight line SL, a ratio d/h of a minimum distance d (µm) between adjacent portions of the spacer to a height h (µm) of the spacer is, for example, 10 or more and 800 or less, and may be 40 or more and 400 or less. By controlling the ratio d/h within the above range, a space which is necessary and sufficient for storing lithium metal tends to be secured. Furthermore, a more uniform pressing force can be applied all over the deposited lithium metal from the separator. The minimum distance d between adjacent portions of the spacer can be determined by measuring the minimum distance at one point each on any 10 straight lines SL, and averaging the measured values.

The spacer may be constituted by, for example, a plurality of linear protrusions arranged in stripes, so as to cross the direction D1, on the surface of the electrode or the separator. For example, a protrusion extending along the long side direction of the separator (hereinafter, the direction D2) may be provided at each of two ends in the direction D1 on the surface of the separator, and one or more protrusions extending along the second direction D2 may be further provided between the two ends. In this case, it is possible to draw a straight line SL passing through the spacer at three or more points in total, namely two points at the two ends and one or more points between the two ends. Such a spacer constituted by a plurality of linear protrusions can be relatively easily formed on the surface of the separator or the electrode. Furthermore, it is easy to control the parameters, such as the height h, and the ratio d/h.

In the following, an example of the battery module according to the present disclosure will be specifically described with reference to the drawings. The components as described above can be applied to the components of the below-described examples of the battery module. The components of the below-described examples of the battery module can be modified based on the description above. The matters as described below may be applied to the above embodiments. In the figures below, some reference numerals may be omitted for the sake of clarity.

### (Embodiment 1)

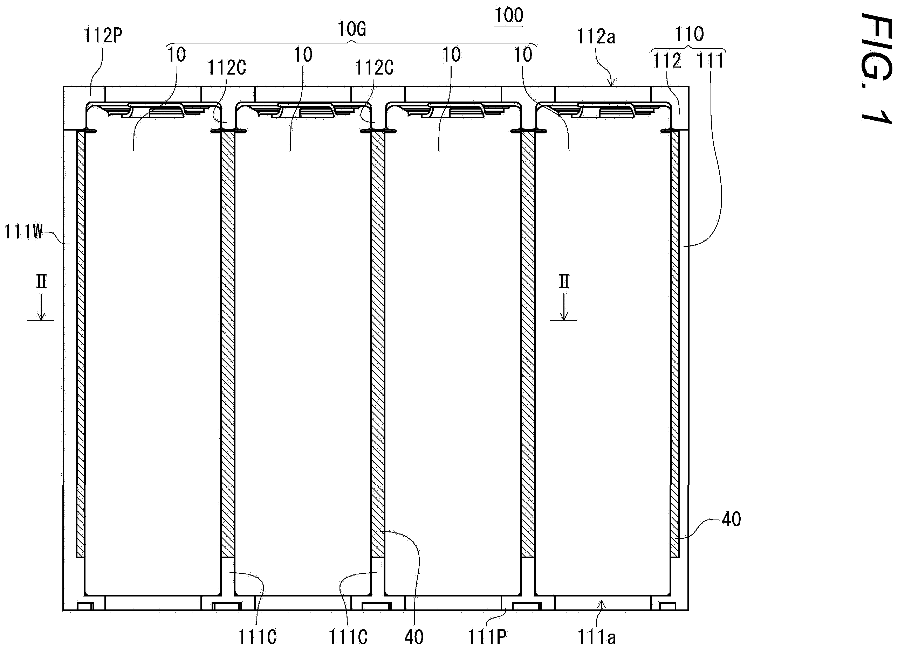

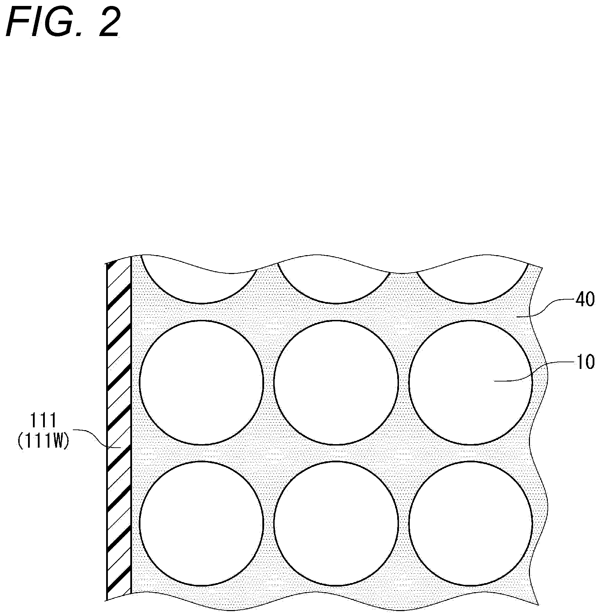

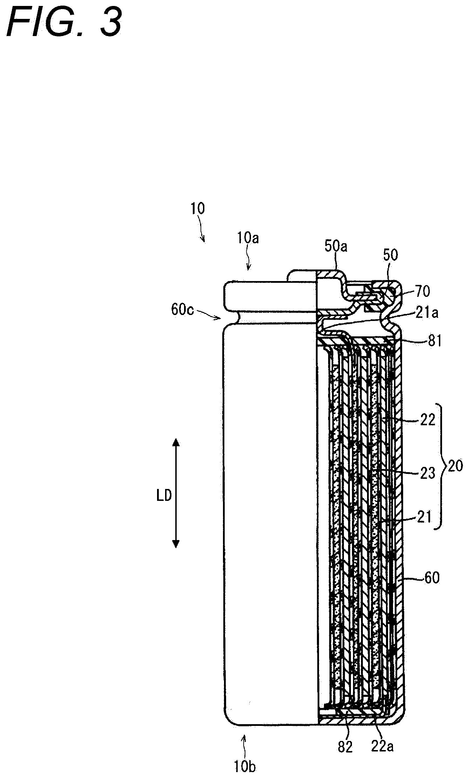

FIG. 1 is a schematic cross-sectional view of part of a battery module 100 according to Embodiment 1. FIG. 2 is a cross-sectional view taken along line II-II of the part of the battery module in FIG. 1, which is a cross section perpendicular to the axial direction of batteries. FIG. 3 is a schematic front view, partially shown in cross section, of an example of a lithium secondary battery 10 included in the battery module 100.

The battery module 100 includes a battery group 10G including a plurality of lithium secondary batteries 10 aligned side by side, and a holder 110 housing the lithium secondary batteries 10. The holder 110 includes a first holder 111 and a second holder 112. Here, although not shown, the battery module 100 includes an outer case accommodating the holder 110, and conductive members respectively connected to the positive terminal and the negative terminal of the secondary batteries 10.

Referring to FIGS. 1 and 2, the plurality of lithium secondary batteries 10 are arranged in rows within the holder 110. Usually, the plurality of lithium secondary batteries 10 are disposed so as not to come into contact with each other.

As shown in FIG. 3, a plurality of the cylindrical lithium secondary batteries 10 each include a first end 10a and a second end 10b opposite to the first end 10a. The first end 10a and the second end 10b are two ends along the longitudinal direction LD of the secondary battery 10. The orientation of each battery at the ends of the plurality of secondary batteries 10 (e.g., the direction in which the sealing member is oriented) may be the same or different between individual batteries. The longitudinal direction LD is the height direction of the lithium secondary battery 10. In the battery module 100, the longitudinal direction LD is a direction perpendicular to the direction in which the plurality of lithium secondary batteries 10 are aligned side by side.

The lithium secondary battery 10 includes a wound electrode plate group 20 and a non-aqueous electrolyte (not shown). The electrode plate group 20 includes a belt-like positive electrode 21, a belt-like negative electrode 22, and a separator 23. The separator 23 is disposed between the positive electrode 21 and the negative electrode 22. To the positive electrode 21, a positive electrode lead 21a is connected. To the negative electrode 22, a negative electrode lead 22a is connected. The positive electrode 21 includes a positive electrode current collector and a positive electrode active material layer disposed on the positive electrode current collector. The negative electrode 22 includes a negative electrode current collector.

The positive electrode lead 21a is connected at its one end to the positive electrode 21, and connected at the other end to the sealing member 50. The sealing member 50 includes a positive terminal 50a. Usually, the sealing member 50 includes a mechanism that operates as a safety valve when the internal pressure of the battery rises.

The negative electrode lead 22a is connected at its one end to the negative electrode (negative electrode current collector) 22, and connected at the other end to the bottom of a cylindrical portion 60. The cylindrical portion 60 functions as a negative terminal. The cylindrical portion 60 is a bottomed cylindrical can. The cylindrical portion 60 has a ring-shaped groove 60c formed near the first end 10a.

On the upper portion and the lower portion of the electrode plate group 20, an upper insulating ring 81 and a lower insulating ring 82 both made of a resin are disposed, respectively. The cylindrical portion 60 is sealed with a sealing member 50 and a gasket 70. The cylindrical portion 60, the sealing member 50, and the gasket 70 constitute a battery case, and the electrode plate group 20 and the non-aqueous electrolyte are disposed within the battery case.

The first holder 111 includes a planar portion (flat plate-like portion) 111p and an outer sidewall 11 1w extending from a periphery of the planar portion 111p. The outer sidewall 111w is disposed so as to surround most of the outer peripheral surfaces of the plurality of lithium secondary batteries 10. A heat absorbing material 40 is filled into the space between the plurality of lithium secondary batteries 10 and the space between the lithium secondary batteries 10 and the first holder 111. The second holder 112 has a planar (flat plate-like portion) 112p. The second holder 112 also functions as a lid member that covers the top opening of the first holder 111 housing the plurality of lithium secondary batteries 10 and the heat absorbing material 40. The first holder 111 and the second holder 112 may be fixed to each other with bolts or the like.

The first holder 111 and the second holder 112 respectively have a first opening 111a and a second opening 112a for communication between inside and outside of the holder 110, at positions respectively facing the first end 10a and the second end 10b of the lithium secondary battery 10. From the first opening 111a, the lithium secondary battery 10 is exposed on its first end 10a side, while from the second opening 112a, the lithium secondary battery 10 is exposed on its second end 10b side.

A rib is provided on the planar portion 111p of the first holder 111 so as to surround the first opening 111a, and the rib forms a first housing section 111c. The first end 10a of the lithium secondary battery 10 is housed in the first housing section 111c, so that the first end 10a is held by the first holder 111.

Likewise, a rib is provided on the planar portion 112p of the second holder 112 so as to surround the second opening 112a, and the rib forms a second housing section 112c. The second end 10b of the lithium secondary battery 10 is housed in the second housing section 112c, so that the second end 10b is held by the second holder 112.

The heat absorbing material 40 is in contact with the first holder 111 (the inner surface of the first holder 111), whereas the heat absorbing material 40 may not be in contact with the second holder 112. There may be a gap between the heat absorbing material 40 and the second holder 112.

### (Embodiment 2)

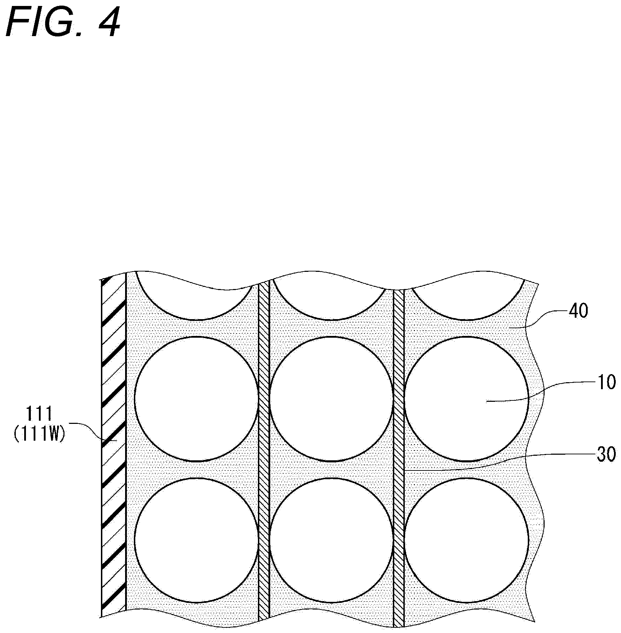

FIG. 4 is a partial cross-sectional view of another battery module according to the Embodiment 2, shown in a cross section perpendicular to the axial direction of batteries. The present embodiment has a configuration similar to that of Embodiment 1, except that a sheet member 30, such as a sheet-like temperature adjustment device or an electrically insulating sheet, is disposed between the plurality of lithium secondary batteries 10 arranged in rows. For example, by disposing a sheet-like temperature adjustment device between the plurality of lithium secondary batteries 10, the temperature control in normal use of the lithium secondary battery can be easily made. Alternatively, by disposing an electrically insulating sheet having a higher strength than the heat absorbing material between the plurality of lithium secondary batteries 10, the risk of an external short circuit between the batteries can be reduced.

Specifically, a plurality of rows each including a plurality of secondary batteries 10 are arranged so as to be aligned along the line direction perpendicular to the rows. In each row, the plurality of secondary batteries 10 are arranged at substantially equal intervals along the line direction. The sheet member 30 is interposed between two adjacent rows. When the sheet member is a temperature adjusting device or an electrically insulating sheet, by bringing the sheet member 30 into contact with the outer peripheral surface of the lithium secondary battery 10, the temperature control can be further easily made, or the effect of suppressing an external short circuit can be increased.

The sheet-like temperature adjusting device that can be used is, for example, an aluminum extruded material with a coolant flow path formed therein, a sheet-like heater with a heating wire disposed therein, or a combination of these devices. By using such a temperature adjusting device, the heat dissipation of the cell heated to high temperature can be improved. The insulating sheet that can be used is, for example, a resin sheet or a rubber sheet.

### (Embodiment 3)

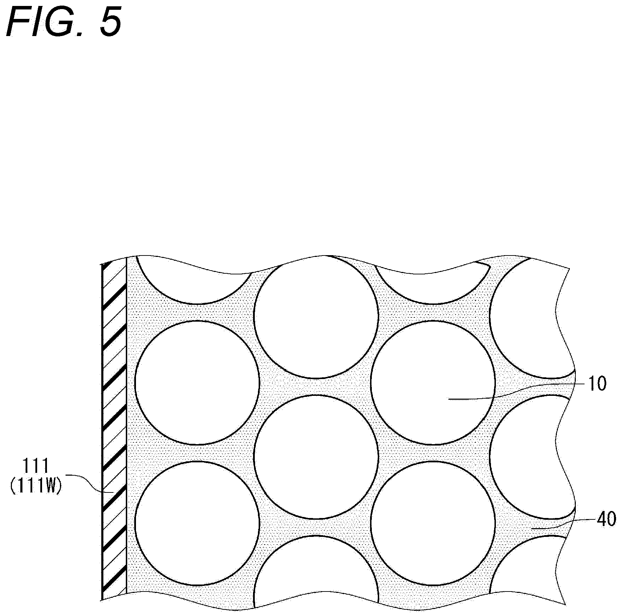

FIG. 5 is a partial cross-sectional view of still another battery module according to Embodiment 3, shown in a cross section perpendicular to the axial direction of batteries. The present embodiment has a configuration similar to that of Embodiment 1, except that the lithium secondary batteries are arranged in a staggered manner in the holder 110. By arranging the lithium secondary batteries in a staggered manner, the energy density per unit volume of the battery module can be increased.

Specifically, a plurality of lines each including a plurality of secondary batteries 10 are arranged so as to be aligned along the row direction perpendicular to the lines. In each line, the plurality of secondary batteries 10 are arranged at substantially equal intervals along the line direction. In two adjacent lines, the positions of the secondary batteries 10 are staggered from each other along the line direction. In two lines adjacent to each other with one line therebetween, the positions of the secondary batteries 10 in the line direction are the same with each other. In one example, a staggered arrangement means that, supposing that the same shapes of hexagons are drawn so as to fill a plane without gaps therebetween, the secondary batteries 10 are placed one each at the vertices of the hexagons and at the center of each hexagon. As shown in FIG. 2, there is a space between the plurality of secondary batteries 10. The plurality of secondary batteries 10 are arranged so as not to come into contact with each other.

### (Embodiment 4)

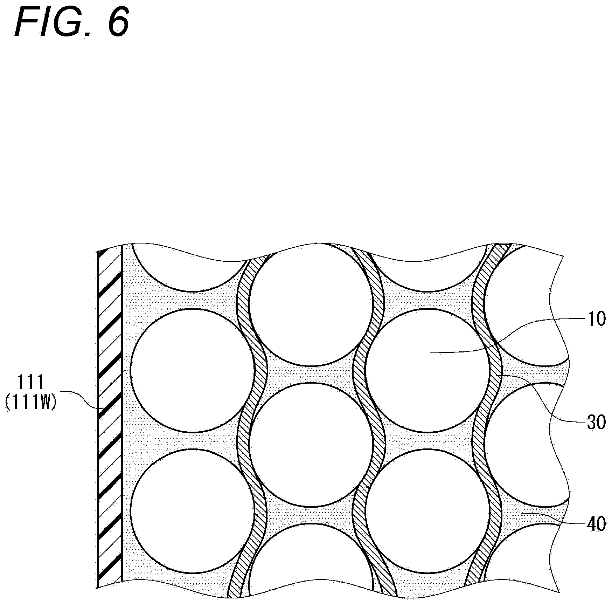

FIG. 6 is a partial cross-sectional view of yet another battery module according to Embodiment 4, shown in a cross section perpendicular to the axial direction of batteries. The present embodiment has a configuration similar to that of Embodiment 3, except that the sheet member 30, such as a sheet-like temperature adjusting device and an electrically insulating sheet, is disposed between the plurality of lithium secondary batteries 10 arranged in a staggered manner. When the sheet member 30 used as a temperature adjusting device or an electrically insulating sheet is flexible, the sheet member 30 can be easily bent in a wavy shape along the outer peripheral surfaces of the lithium secondary batteries 10, so that the sheet member 30 can be easily brought into contact with the outer peripheral surfaces of the lithium secondary batteries 10 arranged in a staggered manner, and also, the contact area is increased. Thus, the temperature control can be further easily made, or the effect of suppressing an external short circuit can be increased.

### (Method for manufacturing battery module 100)

The method for manufacturing a battery module according to the present disclosure is not limited to a particular method. An example of the method of manufacturing the battery module 100 will be described below. First, component parts and materials necessary to manufacture the battery module 100 are prepared. The first and second holders 111 and 112 can be formed by, for example, injection molding of a resin serving as a material. Next, the first holder 111 is placed, with the planer portion 111p of the first holder 111 situated on the lower side. Next, the first end 10a of the lithium secondary battery 10 is inserted into the first housing section 111c of the first holder 111. At this time, the first holder 111 and the first end 10a may be fixed together, with an adhesive or the like. Next, the heat absorbing material 40 before curing is filled into the space between the plurality of lithium secondary batteries 10 and the space between the lithium secondary batteries 10 and the first holder 111. At this time, the heat-absorbing material 40 before curing is filled to a level not exceeding the height of the outer sidewall 11 1w of the first holder 111.

After the heat absorbing material 40 is cured, the first holder 111 and the second holder 112 are combined and fixed, to form the holder 110. At this time, the second end 10b of the lithium secondary battery 10 is inserted into the second housing section 112c of the second holder 112. At this time, the second holder 112 and the second end 10b may be fixed together, with an adhesive or the like. Next, conductive members for charging and discharging are connected to the electrode terminals. Then, the holder 110 with the conductive members is fixed into the outer case, followed by wiring and the like as needed. In this way, the battery module 100 is obtained.

### [Examples]

In the following, the battery module according to the present disclosure will be more specifically described with reference to Examples and Comparative examples. The present disclosure, however, is not limited to the following examples.

### «Example 1»

### (1) Production of positive electrode

A layered rock-salt type lithium-containing transition metal oxide (NCA: positive electrode active material) containing Li, Ni, Co, and Al (the molar ratio of Li to the total of Ni, Co and Al is 1.0), acetylene black (AB; conductive agent), and polyvinylidene fluoride (PVdF; binder) were mixed in a mass ratio of NCA: AB : PVdF = 95 : 2.5: 2.5, to which an appropriate amount of N-methyl-2-pyrrolidone (NMP) was added and stirred, to prepare a positive electrode mixture slurry. The resultant positive electrode mixture slurry was applied onto both sides of a belt-like Al foil (positive electrode current collector), followed by drying, and then, the applied films of positive electrode mixture was rolled using a roller. Finally, the resultant stack of the positive electrode current collector and the positive electrode mixture was cut into a predetermined electrode size, to obtain a positive electrode having positive electrode mixture layers on both sides of the positive electrode current collector.

### (2) Separator

A 20-µm-thick microporous film made of polyethylene was prepared as a separator.

### (3) Formation of spacer

A spacer ink was prepared by mixing 10 parts by mass of polyvinylidene fluoride (PVdF) which is a resin material, 90 parts by mass of alumina which is inorganic particles (containing alumina having an average particle diameter of 1 µm and alumina having an average particle diameter of 0.1 µm in a mass ratio of 10/1), and a dispersion medium N-methyl-2-pyrrolidone (NMP).

On each of both surfaces of the separator, the spacer ink was applied along the direction D2 (longitudinal direction), followed by hot air drying, to provide a spacer composed of linear protrusions parallel to each other. The spacer ink was applied using a dispenser. The width of each protrusion of the spacer was 1 mm, and the height t was 30 µm.

### (4) Production of negative electrode

A belt-like electrolytic copper foil (thickness: 15 µm) was prepared as a negative electrode current collector.

### (5) Preparation of non-aqueous electrolyte

Ethylene carbonate (EC) and dimethyl carbonate (DMC) are mixed in a volume ratio of EC : DMC = 30 : 70, and to the resultant mixture, LiPF₆ and LiBF₂(C₂O₄) were added respectively at a concentration of 1 mol/L and 0.1 mol/L, to prepare a non-aqueous electrolyte in a liquid form.

### (6) Fabrication of battery

The positive electrode and the negative electrode current collector were spirally wound via the separator therebetween, in an inert gas atmosphere, to make an electrode plate group. Here, since all the lithium contained in the electrode plate group is derived from the positive electrode, the molar ratio mLi/mM of the total amount mLi of the lithium that the positive electrode and the negative electrode have, to the amount mM of the metal M (here, Ni, Co and Al) that the positive electrode has, is 1.0.

The electrode plate group was housed in a bottomed cylindrical can made of stainless steel provided with a safety mechanism (on the second holder side) on the bottom, into which the non-aqueous electrolyte was then injected, and thereafter, the opening of the can was sealed with a sealing member having a safety mechanism (on the first holder side), to complete a lithium secondary battery.

The ratio of the volume Vs of gaps in the electrode plate group, relative to the true volume Vr of the electrode plate group was designed to be 39%. The rated capacity of a lithium secondary battery A thus obtained was 4700 mAh, and the energy density was 1028 Wh/L.

### (7) Fabrication of battery module

A battery module having a structure as shown in FIGS. 1 and 2 was fabricated using one lithium secondary battery A and, as dummy cells, 15 aluminum rods having the same diameter as the lithium secondary battery A. Specifically, the first holder and the second holder were prepared, and with the planar portion of the first holder situated on the lower side, the first end of the lithium secondary battery A was inserted into the first housing section of the first holder. Then, a heat absorbing material before curing was filled into the space between the lithium secondary battery A and the dummy cells, and the space between the lithium secondary battery A and dummy cells, and the first holder.

For the heat absorbing material, a two-liquid type urethane resin was used as a resin, and aluminum hydroxide was used as an inorganic substance that decomposes through an endothermic reaction. The proportion of the aluminum hydroxide contained in the heat absorbing material is 70 mass%. The two-liquid type urethane resin is constituted of a polyol component (first material) and a polyisocyanate component (second material).

After the heat-absorbing material (specifically, a two-liquid type urethane resin) was cured by heating, the first holder and the second holder were fixed to each other with bolts, to fabricate a holder and, thus, a battery module A. At this time, the second end of the lithium secondary battery A was inserted into the second housing section of the second holder.

### [Evaluation 1]

The obtained battery module A was subjected to a thermal runaway test.

A nail penetration test was performed under the following conditions.

First, the lithium secondary battery A in the battery module was charged as follows.
Constant-current charging: 0.1 C (end-of-charge voltage: 4.3 V)
Constant-voltage charging: 4.3 V (end-of-charge current: 0.01 C)

With respect to the lithium secondary battery A in the battery module A after charging, in a 20 °C environment, an iron round nail of 2.7 mm in diameter was driven thereinto from its side at a rate of 5 mm/s, and the temperature at the cylindrical portion (can) of the battery case was observed for 20 seconds after penetration, to determine a highest temperature TAe reached during this period.

Likewise, with respect to the lithium secondary battery A before incorporated into the battery module A, too, after charging in a similar manner to the above, in a 20 °C environment, an iron round nail with a diameter of 2.7 mm was driven thereinto from its side at a rate of 5 mm/s, and the temperature at the cylindrical portion (can) of the battery case was observed for 20 seconds after penetration, to determine a highest temperature TAr reached during this period.

### <<Comparative Example 1»

### (1) Production of negative electrode

Artificial graphite (average particle diameter: 25 µm), styrene-butadiene rubber (SBR), and sodium carboxymethyl cellulose (CMC-Na) were mixed in a mass ratio of artificial graphite : SBR : CMC-Na = 100 : 1 : 1, to which water was added and stirred, to prepare a negative electrode mixture slurry. The resultant negative electrode mixture slurry was applied to both sides of a belt-like electrolytic copper foil (thickness: 15 µm), and then dried, and the applied films of negative electrode mixture was rolled using a roller. Finally, the resultant stack of the negative electrode current collector and the negative electrode mixture was cut into a predetermined electrode size. Thus, a negative electrode having negative electrode mixture layers on both sides of the negative electrode current collector was obtained.

### (2) Preparation of non-aqueous electrolyte

Ethylene carbonate (EC) and diethyl carbonate (DEC) were mixed in a volume ratio of EC : DEC = 50 : 50, and to the resultant mixture, LiPF₆ was added at a concentration of 1.2 mol/L, to prepare a non-aqueous electrolyte in a liquid form.

### (3) Fabrication of battery

A lithium ion secondary battery B was fabricated in the same manner as in Example 1, except that the above negative electrode and the non-aqueous electrolyte were used, and the spacer was formed on both surfaces of the separator. The ratio of the volume Vs of gaps in the electrode plate group, relative to the true volume Vr of the electrode plate group was designed to be 25%. The rated capacity of a lithium secondary battery thus obtained was 3180 mAh, and the energy density was 630 Wh/L.

### (4) Fabrication of battery module

A battery module B was fabricated in the same manner as in Example 1, except that the lithium ion secondary battery B was used in place of the lithium secondary battery A.

### [Evaluation 2]

The obtained battery module B was subjected to a thermal runaway test in a similar manner to in Evaluation 1, to determine a highest temperature TBe.

Likewise, the lithium secondary battery B before incorporated into the battery module B, too, was subjected to a thermal runaway test, to determine a highest temperature TBr.

The results of Evaluation 1, 2 are shown in Table 1. In Table 1, the ratio of TAe to TAr (TAe/TAr), the ratio of TBe to TBr (TBe/TBr) are shown. The unit of each temperature is °C.

**[Table 1]**

| | Te/Tr |
|---|---|
| Example | 0.552 |
| Comparative Example | 0.693 |

Table 1 shows that in the battery module A in which the lithium secondary battery A was combined with a heat absorbing material, the increase in battery temperature was remarkable suppressed by the heat absorbing material. On the other hand, in the battery module B in which the lithium ion secondary battery B having a lower energy density was combined with a heat absorbing material, the increase in battery temperature was suppressed by the heat absorbing material, but the effect of minimizing the increase width was limited.

As shown above, there was a significant difference in the effect of suppressing the increase in battery temperature. This is presumably because in the lithium secondary battery A, the safety mechanisms included in the battery were activated quickly, and the amount of gas discharged outside was increased, and the heat capacity of the battery was decreased in the early stage.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The present disclosure is applicable to a battery module.

### [Reference Signs List]

- 10: lithium secondary battery
- 10a: first end
- 10b: second end
- 10G: battery group
- 60: cylindrical portion
- 60c: groove
- 100: batter module
- 110: holder
- 111: first holder
- 111c: first housing section
- 111a: first opening
- 111w: outer sidewall
- 112: second holder
- 112c: second housing section
- 40: heat absorbing material

## Claims

1. A battery module, comprising:
a plurality of lithium secondary batteries aligned side by side; and
a heat absorbing material disposed in contact with side surfaces of the plurality of lithium secondary batteries, wherein
the lithium secondary battery includes an electrode plate group, a non-aqueous electrolyte having lithium ion conductivity, and a battery case housing the electrode plate group and the non-aqueous electrolyte,
the electrode plate group includes a positive electrode, a negative electrode, and a separator interposed between the positive electrode and the negative electrode, and
at the negative electrode, a lithium metal deposits during charge and the lithium metal dissolves during discharge.

2. The battery module according to claim 1, further comprising:
a spacer disposed between the separator and at least one of the positive electrode and the negative electrode, wherein
a region facing the positive electrode of the negative electrode has a first region facing the spacer, and a second region not facing the spacer.

3. The battery module according to claim 2, wherein a height of the spacer is 20 µm or more.

4. The battery module according to any one of claims 1 to 3, wherein a ratio of a volume Vs of gaps in the electrode plate group, relative to a true volume Vr of the electrode plate group is 30% or more and 45% or less.

5. The battery module according to any one of claims 1 to 4, wherein
the non-aqueous electrolyte contains an oxalate salt,
a mass ratio of the oxalate salt to the electrode plate group is 0.0004 to 0.0019.

6. The battery module according to claim 5, wherein the oxalate salt includes lithium difluorooxalateborate.

7. The battery module according to any one of claims 1 to 6, wherein a proportion of the lithium metal with respect to all lithium disposed on the negative electrode is 92 mass% or more.

8. The battery module according to any one of claims 1 to 7, further comprising:
a holder housing the plurality of lithium secondary batteries and the heat absorbing material, wherein
the holder includes a first holder and a second holder,
the plurality of lithium secondary batteries each have a first end in a height direction that is perpendicular to the aligning direction, and a second end opposite to the first end, and
the first end is housed in the first holder, and the second end is housed in the second holder.

9. The battery module according to any one of claims 1 to 8, wherein
the heat absorbing material includes a resin, and particles packed in the resin, and
the particles contain an inorganic substance that decomposes through an endothermic reaction.
